# EUROPEAN PATENT APPLICATION

(11) **EP 1 439 375 A2**
(43) Date of publication of application: **21.07.2004**
(21) Application number: 04000656.1
(22) Date of filing: 14.01.2004
(51) Int. Cl.: G01D 5/245

(54) **Method and apparatus for obtaining a sine wave from an analog quadrature encoder**

(30) Priority: 15.01.2003 US 342483
(71) Applicant: Xerox Corporation, Rochester, New York 14644 (US)
(72) Inventor: Martenson, David D., Oregon City OR 97045 (US); Knierim, David L., Wilsonville OR 97070 (US)
(74) Representative: Grünecker, Kinkeldey, Stockmair & Schwanhäusser Anwaltssozietät

(57) **Abstract**

In accordance with one aspect of the application, an optical encoder is provided having an emitter with a light source which emits a beam of light. A lens may be located to receive the beam of light generated from the light source to collimate the beam into a substantially parallel beam. A detector is positioned opposite the emitter to detect and process light received from the emitter. A coding element having a plurality of markings and spaces is positioned between the emitter and the detector, causing the light beam to be interrupted in accordance with the pattern. The markings have a length and a width, wherein at least a first edge of the length is other than a straight line.

In accordance with another aspect of the application, a coding element is formed having a plurality of markings and spaces, where each of the markings include a length and a width, and where at least the first edge of the length is other than a straight line.

## Description

### BACKGROUND OF THE INVENTION

The present application is related to position transducers and rotary motion encoders and to methods for encoding machine control information for equipment employing a workpiece transport system. The invention has particular utility for pulse encoders which provide operational output control signals for equipment such as printers, including those frequently referred to as continuous stream or drop-on demand. Such printers which include thermal, piezoelectric and acoustic printers, have at least one printhead from which droplets of ink or other fluid are directed towards a recording medium. It is to be appreciated, however, the present concepts may be employed in other printing and non-printing systems where position detection and rotary motion encoders are determined to be useful.

In typical ink-jet printing machines, the carriage transports the printhead assembly across the page for printing and also moves the carriage to predetermined locations for capping, priming, and other maintenance functions. In each of these instances, the carriage is moved across the recording medium in a controlled fashion or is parked at the predetermined locations along the carriage rails. A carriage motor and electronic controller are provided to precisely position the carriage at these locations. Since a motor is typically used, the rotary motion of the motor is converted to the linear motion of the carriage by among others, a toothed or smooth belt/pulley, a cable/capstan or a lead screw. In addition to these devices, which move the carriage in a linear fashion, the linear motion is controlled and/or kept track of by an encoder.

Linear and rotary encoders are used for positioning and providing timing of movable members. Linear encoders employ a coding element, such as a linear strip of material having a transparency or reflectivity to light, with a plurality of spaced opaque markings. When illuminated by a source of light, the presence of the markings are detected by an optical sensor and are used to determine positioning and timing. The optical sensor, which detects the markings, generates quadrature signals (e.g., phase A and phase B) which are transmitted to a control system for controlling the motion of a movable member, such as a printhead carriage. The quadrature signals start out as analog waveforms (e.g., photodiode current) inside the encoder. They are often converted to digital signals by comparators before leaving the encoder. Some encoders output analog quadrature signals directly so that interpolation may be used to generate higher resolution position information. Concepts of this application applies to both analog quadrature encoders and to digital encoders in which the analog signals are interpolated to a higher resolution internally before being converted to digital signals. The linear strip of markings mounted on the printer is parallel to the anticipated path of the carriage as it traverses across the recording medium. The light source and sensor are typically mounted on the carriage so that as the carriage reciprocates back and forth across the recording medium the combination light source/sensor illuminates and detects the markings on the encoder strip.

Rotary encoders generally use a transparent or reflective disk coupled to a rotating member, where the disk includes a plurality of spaced markings. The markings are arranged on the disk whereby as the markings rotate with the rotating member, an illumination source/sensor senses the markings for determining the position, velocity and acceleration of the rotating member. The illuminating source and the sensor can be disposed on opposite sides of the rotating disk, in the case of a transparent disk, to sense the passage of markings when the remainder of the disk is transparent to light. In this way, one cycle of the quadrature signals is generated for each increment between adjacent marks of the disk.

Reflective encoder strips or disks may be used instead of transmissive ones. In this case, both the light source and detector reside on the same side of the strip or disk. The markings generally consist of non-reflective areas on an otherwise reflective substrate.

In both the linear and disk designs, the markings are typically spaced a predetermined distance apart, depending on a desired encoder resolution. The marks are typically produced via a photographic or etching process. Once the strip or disk has been made, it is mounted on a support member such as a stationary platform, as in the case of monitoring the position of a printhead carriage, or a moving platform when the disk is mounted on the rotating member.

In existing encoder systems, the encoder strip and disk are typically designed wherein the markings are in the form of opaque quadrilaterals, having substantially straight edges. (In the disk design, the outer and inner edges of the quadrilaterals are often slightly curved to match the radius of the code wheel pattern.) Quadrilateral spaces (or windows) between the opaque quadrilateral markings are transparent to light. In the linear strip design, the markings are substantially rectangular in with 90° angles. On the other hand, the markings on a disk may have a narrower bottom edge near the center of the disk compared to its top edge. This adjustment is provided to account for placing the marks on the round disk surface.

Existing analog encoder systems employing strips or disks as described above, commonly result in an output of a rounded-off triangle waveform having a substantial harmonic content. This output waveform is not well controlled. The harmonic content is dependent upon the sharpness of the illumination source and the position and rotation of the encoder assembly relative to the strip or disk. This lack of predictability and inconsistency introduces errors into the positions read by the encoder, specifically in the interpolated positions between the still accurate 0/90/180/270 degree positions. In this discussion, degrees refer to fractions of 360 degrees of the distance from one encoder bar to the next, not to rotation of an encoder disk.

These errors may simply be ignored. However, ignoring the errors leads to degradation in the operation of the system and the printed image. A less collimated light source may be used to reduce harmonic content, but its effectiveness varies dramatically with the position of the strip or disk between the light source and detector.

### SUMMARY OF THE INVENTION

In accordance with one aspect of the application, an optical encoder is provided having an emitter with a light source which emits a beam of light. A lens may be located to receive the beam of light generated from the light source to collimate the beam into a substantially parallel beam. A detector is positioned opposite the emitter to detect and process light received from the emitter. A coding element having a plurality of markings and spaces is positioned between the emitter and the detector, causing the light beam to be interrupted in accordance with the pattern. The markings have a length and a width, wherein at least a first edge of the length is other than a straight line. In one embodiment each marking of the coding element includes:
a first edge defined by,
   a slope ratio from 2:1 to 5:1 between a first slope and a second slope, the first slope defined as between a first point and a second point of the first edge, and the second slope defined as between the second point and a third point of the first edge. In a further embodiment,
   a horizontal displacement of the second point from the first point is between 0.05 and 0.5 units; and
   a horizontal displacement of the third point from the second point is between 0.01 to 0.1 units.

In a further embodiment a horizontal displacement of the second point from the first point is approximately 0.0947954 units, and
a horizontal displacement of the third point from the second point is approximately 0.34512 units.

In a further embodiment a horizontal displacement of a second point from the first point is between 0.05 to 0.5 units;
a horizontal displacement of a third point from a second point is between 0.01 to 0.1 units; and
a horizontal displacement of a fourth point from the third point is between 0.01 to 0.1 units.

In a further embodiment a horizontal displacement of a second point from the first point is approximately 0.1141746 units;
a horizontal displacement of a third point from a second point is approximately 0.038739 units; and
a horizontal displacement of a fourth point from the third point is approximately 0.0347916 units.
In a further embodiment the markings of the code wheel are designed to notch at least a 3rd harmonic frequency.
In a further embodiment each of the markings of the coding element include a first edge and a second edge, the first edge having a plurality of defined points, at least some of the points being offset from each other in a horizontal direction, and the second edge having a plurality of defined points horizontal from and corresponding to the plurality of defined points of the first edge, the first edge and second edge having other than straight edges. In a further embodiment each of the markings are sized to provide a complete vertical cycle within the height range of the detectors.
In a further embodiment the markings transition from substantially transparent to substantially opaque.

In a further embodiment each of the markings of the coding element include a first edge and a second edge, the first edge having a plurality of defined points, at least some of the points being offset from each other in a first direction, and the second edge having a plurality of defined points a distance from and corresponding to the plurality of defined points of the first edge, the first edge and second edge having other than straight edges.

In accordance with another aspect of the application, a coding element is formed having a plurality of markings and spaces, where each of the markings include a length and a width, and where at least the first edge of the length is other than a straight line.

In one embodiment of the method as defined in claim 10 the forming step includes generating a first edge of the markings, wherein the first edge is other than a straight edge.
In a further embodiment the forming step includes
generating the non-straight first edge; and
translating points of the first edge a distance from the first edge to form a non-straight second edge.
In a further embodiment the forming step includes
generating the non-straight first edge; and
inverting points of the first edge to generate a non-straight second edge.

According to another aspect an optical encoder comprises:
a light source which emits a beam of light;
a coding element having a plurality of spaces and markings, causing the light beam to be interrupted by the pattern of spaces and markings; and
a detector to detect and process the light received from the light source, and interrupted by the coding element, into an output signal, the detector including a plurality of light detecting elements arranged to eliminate at least one harmonic frequency of the output signal.

In a further embodiment the detector includes a first edge which is other than a straight edge.

In a further embodiment the markings include first edges which are substantially straight edges.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.

FIGURE 1 is a block diagram of an analog quadrature encoder which incorporates concepts of the present application;

FIGURE 2 is a top view illustrating a relationship between detectors and a code wheel in order to obtain a maximum amplitude output;

FIGURE 3 illustrates a fundamental frequency signal output as well as harmonic outputs from an encoder;

FIGURE 4 depicts a coding element implementing straight-edged quadrilateral markings and windows;

FIGURE 5 is a partial view of a code wheel employing quadrilateral markings and spaces;

FIGURE 6 depicts a coding element according to a first embodiment of the present application;

FIGURE 7 depicts a coding element according to a second embodiment of the present application;

FIGURE 8 sets forth a further embodiment of a coding element generated by use of a translational methodology for the forming of the markings;

FIGURE 9 depicts an embodiment of a coding element employing a first edge which is the same as the first edge of FIGURE 8, which generates a mirror image of the first edge to form markings using a point inverting methodology;

FIGURES 10a and 10b are illustrations of the formation of cusps used in the designs of FIGURES 8 and 9;

FIGURE 11 depicts a method of obtaining a first edge for a further embodiment of markings according to the present application;

FIGURE 12 sets forth markings employing the generated first edge of FIGURE 11 using a translation methodology to form the markings;

FIGURE 13 depicts markings implementing the first edge of FIGURE 11 wherein the markings are generated via the use of a point inverting methodology;

FIGURE 14 depicts a further first edge which may be used to generate markings according to teachings of the present application; and

FIGURE 15 sets forth an embodiment whereby markings are generated via a gray scaling operation.

### DETAILED DESCRIPTION OF THE PREFERRED EMBODIMENTS

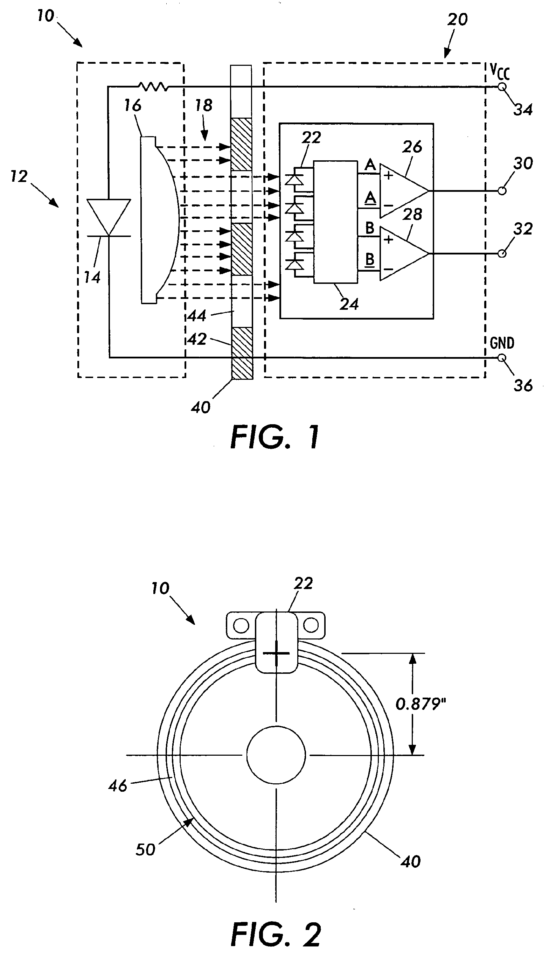

With attention to FIGURE 1, depicted is a block diagram of an optical incremental encoder 10 in which the concepts of the present application may be incorporated. An emitter section 12 includes a light source 14, which in one embodiment is a light-emitting diode (LED), although other known light sources may be used. A lens 16 may be positioned to receive the light emitted from light source 14 and to collimate the light into a parallel beam 18. The lens 16 may be any known focusing element such as a polycarbonate lens or others, sufficient to generate the collimated light 18.

Positioned opposite emitter 12, is a detector circuit 20. In one embodiment, the detector circuit is designed as an integrated detector circuit consisting of detectors 22, signal processing circuitry 24, differential amplifiers 26, 28, and respectively associated with a first output channel 30 and a second output channel 32. The outputs are analog signals used to control a device to which the encoder 10 is associated. Encoder 10 is also illustrated with a voltage source input 34 and a ground 36. The detectors 22 may be one of may types of light detectors, including but not limited to photodiodes.

Interposed between the emitter 12 and detector 20 is a coding element 40, which in this embodiment is depicted as a code wheel. In FIGURE 1, coding element 40 is designed to rotate between emitter section 12 and detector section 20, causing light beam 18 to be selectively interrupted in accordance with the pattern of markings 42 and spaces (i.e., windows) 44. Detectors 22, which detect the light beam, are positioned in a pattern to correspond to the radius and design of the coding element 40. Detectors 22 are also spaced such that a light period on one pair of detectors corresponds to a dark period on an adjacent pair of detectors. Outputs from the detectors 22 are fed through signal processing circuitry 24 to differential amplifiers 26 and 28. The inputs to differential amplifier 26 are A and A, and to differential amplifier 28 are B and B. The outputs of differential amplifiers 26 and 28 are supplied to a first channel output 30 (phase A) and a second channel output 32 (phase B), respectively. This design provides integrated phasing, where the digital output of the first channel 30 is in quadrature (i.e., 90° out of phase) with the digital output of the second channel 32.

It is to be understood that lens 16 is not always necessary. In some cases, the light source is far enough away from the detector to be sufficiently collimated without use of a lens. Further, in reflective code strip or disk encoder designs, the detector is adjacent to the emitter rather than positioned opposite. The present disclosure, including the figures, is intended to address these designs.

With attention to FIGURE 2, presented is a top view where the array of detectors 22 are matched to the optical track pitch 46 of coding element 40 to provide a maximum output signal amplitude from encoder 10. Particularly, FIGURE 2 depicts the detectors 22 and coding element 40 wherein the optical track pitch 46 is matched to the detector array, to produce the maximum output signal amplitude. In this example, the distance from the center of the optical track 50 to the center of the detector 22 is .879 inches.

The two channel optical incremental encoder described in FIGURES 1 and 2, may be any of a number of optical encoders, including but not limited to HEDS 9202, HEDS 9710/9711 or QEDS 9590 series of encoders from Agilent Corporation. Further, while the design of Figure 1 is primarily described in conjunction with a code wheel, the concepts are equally applicable to employ a linear coding element, as will be described in greater detail below.

Two-channel analog quadrature encoders produce rounded-off triangle waveform outputs. The shape of the rounded-off triangle waveforms output by these such encoders is not well controlled. Particularly, waveform shape (harmonic content) depends upon the sharpness (*i.e.*, focus) of the LED illumination source and on the position and rotation of the encoder assembly relative to the coding element. This situation results in the waveforms having a substantial amount of harmonic content, which introduces errors in positions read by the encoder. For example, in the encoder design of FIGURES 1 and 2, only the eight points -- where one of the two channels are zero or where the magnitudes of the two channels match -- provide highly accurate outputs.

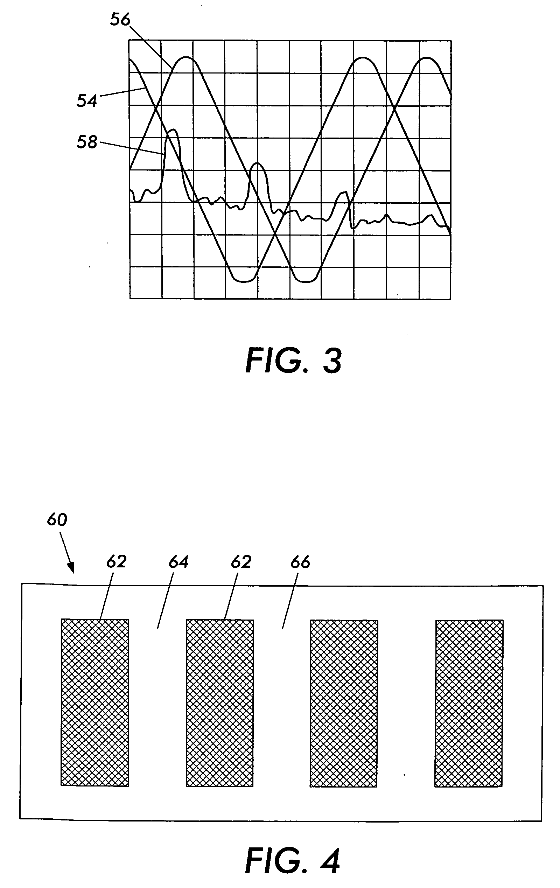

Turning to FIGURE 3, depicted is an example of the described rounded off fundamental frequency triangle waveforms 54 and 56 (Phases A and B, respectively). Also shown is a Fourier transform of the phase A signal, 58.

The harmonics exist, in part, due to the sharp change from the markings and windows (*e.g.*, 42 and 44 of FIGURE 1). With attention to FIGURE 4, illustrated is an existing linear coding element 60, made up of regularly spaced markings 62 and windows 64 with straight edges. This sharp change from the markings 62 to the windows 64, and *vice versa,* exists due to the straight opaque sides or edges of the markings, resulting in an immediate change from the transparency to opaqueness.

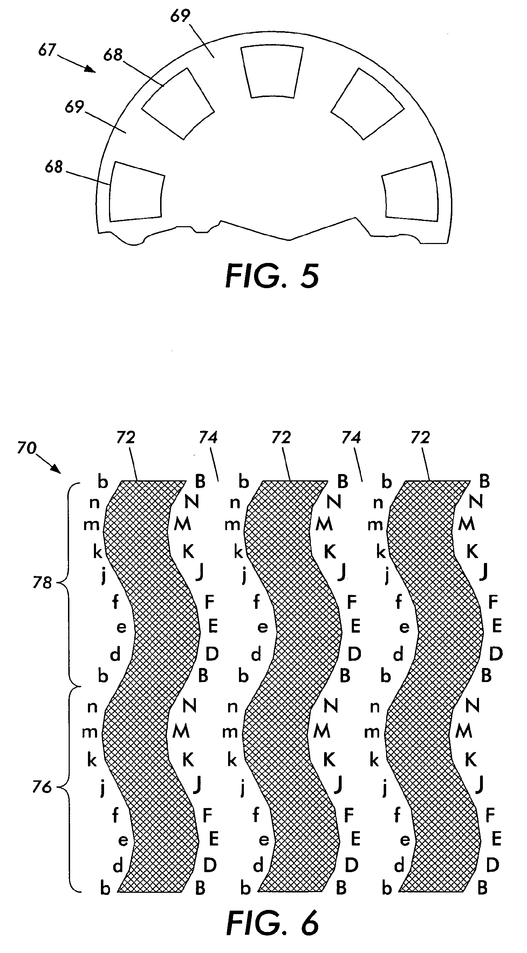

It is to be understood that FIGURE 4 depicts a linear or strip coding element of regularly spaced markings and windows with straight sides. FIGURE 5, on the other hand, depicts a portion of a code wheel 67, including marking 68 and windows 69. While the markings 68 and windows 69 have a slightly altered design from FIGURE 4, it is understood that elongation and compression of the top and bottom edges are made for the use of the coding element with the circular code wheel design. However, such changes provide the same results as with the linear strip.

For convenience, the following discussion, shows the markings in a linear design. It is to be understood, however, that this discussion is intended to also include designs in a code wheel format, wherein such arrangement would be attained by altering the design for placement on a circular area, resulting in the stretching of the upper edges and a shrinking of the lower edges. Transforming from the linear or strip coding element to the code wheel designs, and *vice versa,* are well known in the art, and therefore will not be provided as a separate detailed discussion.

It has been determined by the inventors that eliminating the harmonic content of these triangle waveforms yields a substantially sine wave-shaped signal, improving accuracy of the position information obtained from encoders. One method, such as taught in the present application, to produce a waveform that more closely approximates a sine wave, is to selectively modify the edges of the markings of the coding element.

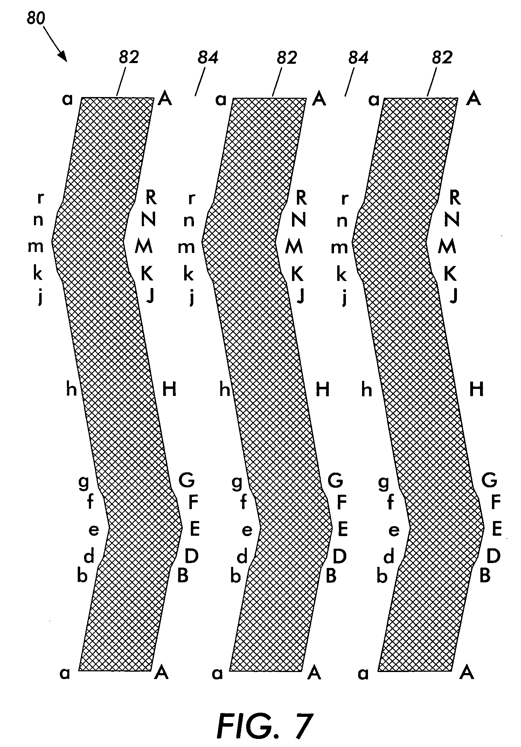

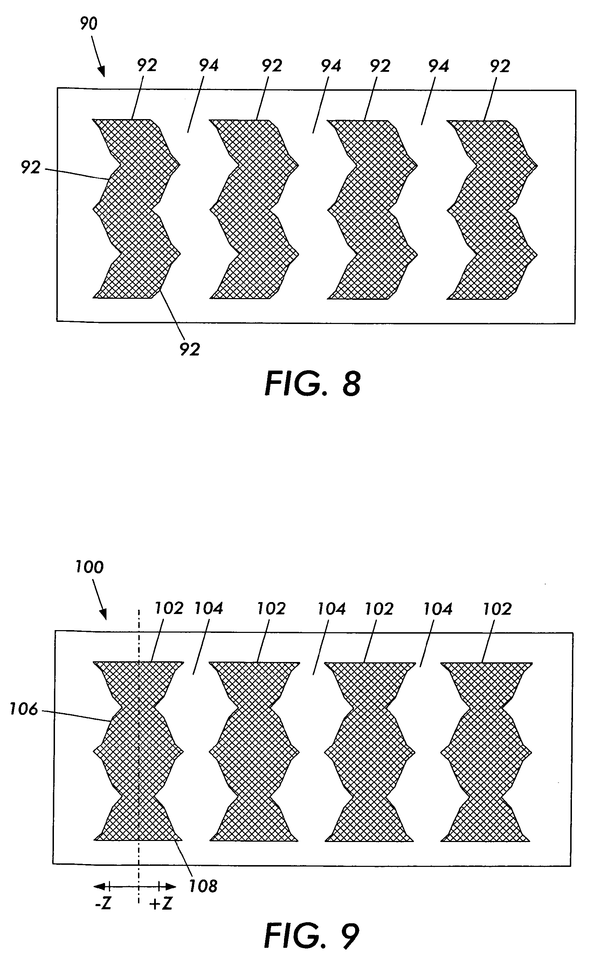

Turning to FIGURES 6 and 7, depicted are two embodiments of coding elements which may be implemented in accordance with the present application. Specifically, FIGURES 6 and 7 are enlarged marking/window patterns for portions of code elements used to notch (*i.e.*, eliminate) harmonics otherwise found in an encoder output signal. The geometry of these markings will be described in dimensionless units, where one unit is defined as the marking's pitch (*i.e.,* the pitch extends from a first edge of a first marking to a first edge of a second marking). These patterns are alternatives to the rectangular markings of existing coding elements, and are designed to reduce the harmonic content of the detected signals. In the present embodiments, the detector array which will detect signals, based on the patterns of the coding elements, are themselves arranged as straight-edged quadrilaterals. It is to be appreciated that the same non-straight edge geometry described below for the code strip marks is equally effective when applied to the detector array light detecting elements (*e.g.*, photodiodes) instead of the code strip marks. In view of this, it is to be understood an encoder of the detectors 22 of FIGURE 1 arranged with non-straight edges such as those designs depicted in FIGURES 6 and 7 (and to be discussed with respect to FIGURES 8-14), and the coding elements may have the straight edges. Still further it is possible that both the coding elements and detectors may be designed, together, to have non-straight edges.

Thus, in prior art systems, both the markings of the coding element and the detectors are arranged in straight-edged quadrilateral formations. In theory, where the imaging is perfectly sharp, this type of design produces a triangle waveform output of photodiode current versus the coding element position. These triangle waveforms contain all odd harmonics at 1/(n*n) amplitude. More particularly, the 3rd harmonic would be at 1/9 amplitude, the 5th harmonic at 1/25 amplitude, the seventh 1/49 amplitude, etc. In practice, the higher order harmonics will fall off rapidly due to a low pass filtering effect of optical fuzziness. However, the 3rd and sometimes 5th and 7th harmonics may be significant and troublesome in the existing encoder systems.

As previously mentioned, the marking patterns shown in FIGURES 6 and 7 are designed to notch (remove) the undesirable harmonics. In the implementation of FIGURE 6, coding element 70, has markings 72 and windows 74 designed to notch 3rd and 7th harmonics of a fundamental frequency. Markings 72 includes two identical vertical cycles 76 and 78 of an edge pattern along the length of each marking 72. The vertical scale of these patterns is not critical, but it is desirable for an integer number of cycles to fit within the length of the detectors. Points along the left or first side of the markings labeled "b, d, e, f, j, k, m and n" define a complete cycle (*i.e*, from b to the end of n ― the beginning of the "next" b). The distance from each left-side point to its corresponding right- or second-side point is 0.5 units and is identified by a corresponding capital letter "B, D, E, F, J, K, M and N".

On the first edge, the pattern formed by b, d, e is vertically mirrored to generate e, f, j, and the pattern b, d, e, f, j is horizontally mirrored to generate j, k, m, n, b. Also illustrated by FIGURE 6, is that vertical distances b-d and d-e appear to be visually similar, but are in fact not identical.

Markings 72 are generated by creating the edge pattern b, d, e, f, j, k, m, n and translating these points a horizontal distance (*i.e.*, 0.5 units) from the left-edge (b-n) to the right edge (B-N), where the horizontal distance is determined in accordance with the encoder design requirements. While the above description explains the process as translating points from a left edge to a right edge, it is to be understood this is only one example of how to generate the markings 72, and other generation techniques may be used, e.g., generating a right edge and translating to a left edge. Also, while the distance between the left-side edge and right-side edge is described as 0.5 units, it is to be appreciated in some embodiments a distance other than 0.5 units may be used.

In view of the mirroring discussed above, in order to create markings 72, as few as only three parameters are needed to generate the edge pattern, which will notch the 3rd and 7th harmonics. The first design parameter is that the slope of d-e, relative to the slope ofb-d, is in a ratio range of approximately from about 2:1 to a ratio of about 5:1, and preferably of about 3:1. This design parameter is considered sufficient to make all comers have about the same angle. This leaves two parameters to select in order to notch the 3rd and 7th harmonics, exactly the correct number of degrees of freedom. These values are the horizontal displacement of d from b, and the horizontal displacement of e from d. In the embodiment shown in FIGURE 6, this horizontal displacement of d from b is in a range of around 0.05 to 0.1, and preferably is about 0.0947954 units; and the horizontal displacement of e from d is in a range of 0.01 to 0.1, and preferably is about 0.034512 units. Therefore, in a preferred design d is 0.0947954 units to the right of b, and e is 0.034512 units to the right of d (*i.e.*, where one unit is the pitch of the markings). The specific values recited may be obtained by optimization techniques which are well known in the art.

With these parameters, the positions of the remaining points can be determined by the use of the described mirroring techniques. It is further noted in regard to markings 72 that f is at the same horizontal position as d, and j is at the same horizontal position as b. k is 0.05 to 0.5, and preferably 0.0947954, units to the left ofj, and m is 0.01 to 0.1, and preferably 0.034512, units to the left of k. n is at the same horizontal position as k. The next b is at the end of the first cycle 76 and designates the beginning of the second cycle 78.

The actual slopes shown in FIGURE 6 have the values 2 and 6 for line segments bd and de respectively. In practice, the slopes are scaled to make the markings complete cycles fit within the length of the detector array. Vertical positions may be calculated using the slopes and the previously defined horizontal positions. For slopes of 6 and 2, one embodiment will have d being 2*0.0947954 = 0.1895908 above b, and e will be 6*0.034512 = 0.207072 above d. The remaining vertical distances repeat the first two, which are based on mirroring.

Turning to FIGURE 7, set forth is a coding element 80 having markings 82 and windows 84 in accordance with a second embodiment. The markings/windows arrangement of coding element 80 provides a design which notches the 3rd, 5th and 7th harmonics of an output signal. In this figure, only a single cycle "a, b, d, e, f, g, h, j, k, m, n, r" (*i.e.*, from a to the end of r - the beginning of next a) is shown. The same slope values of 6 and 2 are used here, although anything with substantially a 2:1 through 5:1, and preferably a 3:1, ratio would be appropriate. The mirroring of this pattern to obtain the markings 82, is similar to that of FIGURE 6. Particularly, e, f, g, h is a vertical mirror of a, b, d, e, and the string h, j, k, m, n, r, a is a horizontal mirror of a, b, d, e, f, g, h.

Having provided the above mirroring and slope designations, the remaining horizontal distance parameters which used to define the pattern of markings 82, is that b will be 0.05 to 0.5, and preferably 0.1141746, units to the right of a; d is 0.01 to 0.1, and preferably 0.038739, units to the right ofb; and e is 0.01 to 0.1, and preferably 0.0347916, units to the right of d. These specific values come from optimization techniques which are well known in the art.

The slope ratios in FIGURES 6 and 7 are chosen in order to maintain all of the comers with approximately the same angles. This ratio selection results in patterns closest to a smooth curve and which are the least sensitive to degradation by comer rounding which may occur due, for example, to photo imaging processes used to generate the coding elements. Other slope ratios could also be used with appropriately matched horizontal distances in order to notch the harmonics. Alternatively, continuous curve functions may be generated to notch the same harmonics. This option would slightly further reduce the sensitivity to photo image rounding, but at the expense of more complicated mathematics to find the correct geometry.

With attention to FIGURES 6 and 7, markings 72 and 82 are obtained by generating a left edge such as designated by characters b-n in FIGURE 6 and a-r in FIGURE 7. Thereafter, a right edge distanced from the left edge is developed (*i.e.*, represented by B-N in FIGURE 6, and A-R in FIGURE 7). The design methodology used to develop the right edge is to translate the points of the left edge a horizontal distance to a right edge. In an alternative methodology, instead of translating, the second edge may be obtained by inverting the points of the left edge and locating these points a horizontal distance from the points of the left edge, creating a mirror image of the first edge.

These concepts are illustrated more particularly by the embodiments shown in FIGURES 8 and 9 which depict coding elements with edges for the markings and windows modified to reduce the 3rd and 5th harmonics. In FIGURE 8, coding element 90 includes markings 92 and windows 94. Similar to FIGURES 6 and 7, a first non-straight edge 96 is constructed to eliminate or reduce the 3rd and 5th harmonics of an output waveform. The points of the first edge are then translated in a horizontal direction to form second edge 98 distanced from the first edge 96. It can be seen that the first edge 96 and the points of the second edge 98 are similarly positioned to each other to form markings 92.

Using the same points of the first edge of markings 92, an alternative design may be implemented, as shown in FIGURE 9. In this embodiment, coding element 100 includes markings 102 and windows 104. For markings 102, a first edge 106 (substantially the same as first edge 96 of FIGURE 8) is formed. However, at this point, the second edge 108 is generated by inverting and moving the first edge points a distance in the horizontal distance. In this second methodology, inverting of the location of a point is intended to mean if a point of the first edge is distanced -z units from a zero vertical axis 109, the corresponding point of the second edge is positioned +z units from the zero vertical axis 109.

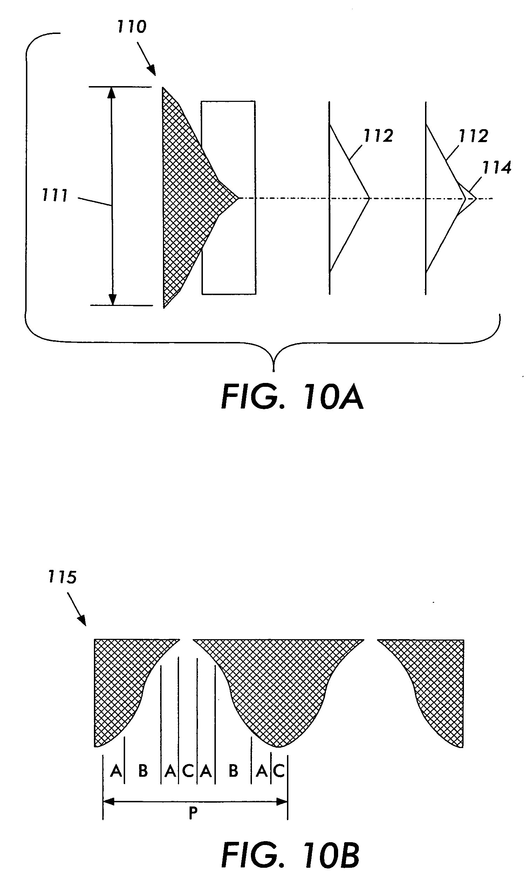

An ideal edge shape to remove unwanted harmonics would be a smooth continuous curve. However, the practicality of such implementation, with present technology, is limited, since that curve would end in an infinitely thin cusp. Thus, FIGURES 8 and 9 implement a design which attempts to approximate the theoretical design. Particularly, the approximation shown in FIGURE 10a is intended to reduce the harmonics sufficiently to provide a sine wave usable in an interpolation scheme. As shown in FIGURE 10a, the overall edge section 110 has a length 111 which is an integer fraction of the height of the detectors in an encoder array. This edge includes section 112 added to eliminate the 3rd harmonic of the output and the additional cusp portion 114 which eliminates the 5th harmonic. It is noted FIGURE 10a is intended to be one cycle of the first edge of the markings in FIGURES 8 and 9. In this design, and as shown further by segment 115 of FIGURE 10b, a distance A is configured to be 3/30 of the optical track pitch, a distance B is 7/30 of the optical track pitch, a distance C is 2/30 of the optical track pitch, a distance P is the optical track pitch, and the edge slope of region B is twice that of region A.

As mentioned above, an issue associated with the markings of FIGURES 8 and 9, as illustrated by FIGURES 10a-b, is the production of the relatively sharp cusps at the edges of, for example, the A regions. These issues become even more pronounced should a section be added to remove a 7th harmonic. Specifically, existing photo imaging, and other techniques used to manufacture the coding elements, have difficulty providing the precision needed to generate the described cusps.

Thus, a distinction between the marking embodiments shown in FIGURES 8 and 9 and those of FIGURES 6 and 7 is that the markings of FIGURES 8 and 9 require the described tight design parameters. Since the points of the patterns of FIGURES 8 and 9 are angular, optical reproduction of these patterns into physical coding elements require precise manufacturing tolerances. Particularly, the sharp cusps of the designs are difficult to emulate in production, as the fuzziness of the optics which are used to generate the patterns and the high contrast for photo emulsion processes used to design the coding elements, makes it difficult to obtain the desired precise pattern designs.

FIGURES 6 and 7, with their rounded features, permit greater tolerance variations in actual physical implementation, making these coding elements easier to manufacture than the embodiments shown in FIGURES 8 and 9, in view of the limitations of existing technology. However, with improved manufacturing capabilities, the sharper edged designs will become more practical to produce in larger volumes.

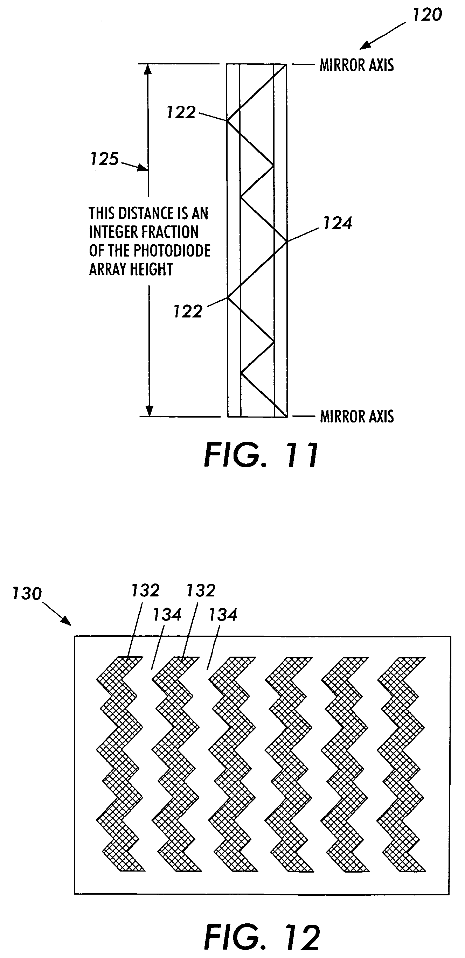

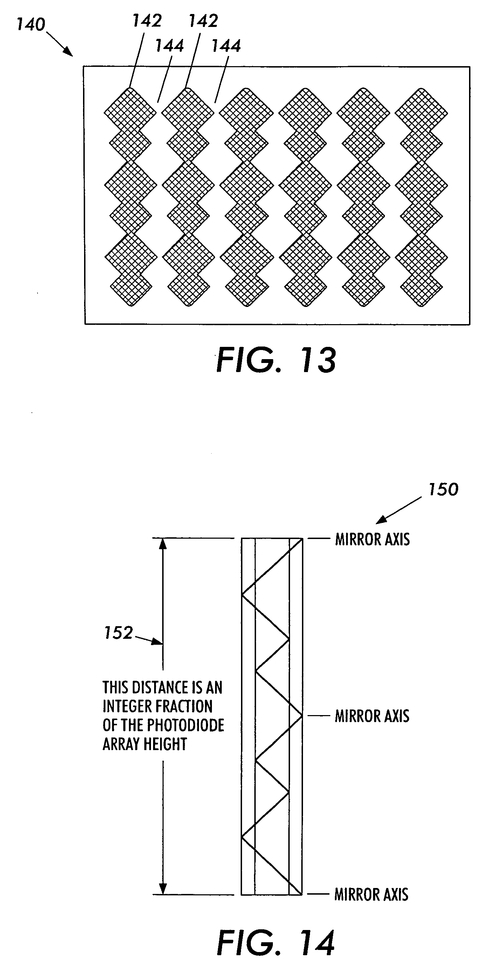

Turning to FIGURE 11, illustrated is a first edge 120 for additional marking designs to remove undesirable harmonics. First edge 120 is configured as a basic triangle shape (not shown) to eliminate 3rd harmonics. However, rather than adding cusps, to eliminate the 5th harmonic, every other outer comer 122 and every other inner comer 124 is shifted horizontally by the same distance one would extend the cusps in connection with the embodiments of FIGURES 9 and 10. The vertical distance 125 is designed to be an integer fraction of the detector array height. Once a first edge 120 is developed, a coding element 130 having markings 132 and windows 134 as shown in FIGURE 12 is generated by translation. Similarly, the same edge design may be used with the inverting methodology as shown in FIGURE 13, where the coding element 140 includes bars 142 and windows 144 where bars 142 have inverted first and second edge positions. It is noted that after the points are shifted horizontally, they would also be shifted vertically, such that the slope of each edge is maintained at an original value.

This concept may be extended to eliminate 7th harmonics by moving the first two of every four comers horizontally by 1/14 of the optical track pitch, and to eliminate the eleventh harmonic by moving the first four of eight comers horizontally by 1/22 of the optical track. As with the 5th harmonic elimination step, this applies separately to both the inner and outer comers of both edges of each edge. The 9th harmonic is eliminated by the initial 3rd harmonic elimination pattern. Each harmonic eliminating step also reduces the amplitude of most higher order harmonics.

Turning to FIGURE 14, a further edge design 150 can be used to reduce sensitivity to rotational mounting errors of the encoder, that is, to give the markings mirror symmetry across horizontal lines. An exact even number of horizontal symmetry lines should fit within the vertical size of the encoders' detectors 152. For example, on the 5th harmonic elimination pattern of FIGURE 11, the positions of comers 1, 4, 5, 7, 8, 11, 12, 15, etc. are adjusted, instead of every other comer, for all the left pointing comers (outer comers of the left side and inner comers of the right side).

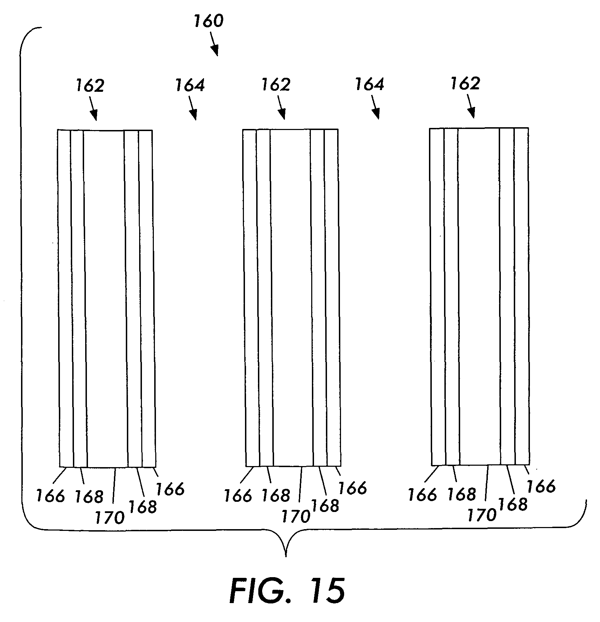

Turning to FIGURE 15, depicted is an alternative coding element 160 embodiment to remove harmonics, including rectangular markings 162 and spaces 164. However, as opposed to being an immediate transition from a space 164 to a marking 162, the regularly-spaced markings 162 are generated by use of a gray scale shading. Specifically going from a transparent (*i.e.*, window) area to a somewhat transparent area 166, to a somewhat opaque area 168 to a full opaque area 170. By controlling transition from transparent to fully opaque, harmonics may be reduced as the sharp transition is eliminated.

It is to be appreciated, the concepts of altering the markings from a straight line edge to a varying line edge as discussed, may be combined with transitioning from a transparent to opaque state.

While the foregoing discussion has focused primarily on altering the coding element from a quadrilateral or rectangular form to markings having other than straight edges, the reduction in harmonics may also be obtained by altering the detectors rather than the markings of the coding elements. Particularly, in existing systems, the detector array is arranged where a first edge of the array has substantially straight edges, matching the existing markings (*e.g.*, as shown in FIGURE 3). However, the concepts of the present invention may also be implemented where it is the markings of the coding element are maintained in a rectangular design format having substantially first and second straight edges, and the detector array is designed in arrangements such as shown in the foregoing embodiments or other designs which do not have straight-lined edges.

Still a further concept to increase the triangle waveform to a more sine wave output, is to mismatch the sensor and optical track pitch whereby a large amplitude output is not achieved, thereby also decreasing the harmonic contents of the output signals. Similarly, intentionally misaligning the sensor and the optical track may also change the triangle waveforms to more of a sine waveform.

## Claims

1. An optical encoder comprising:
an emitter including,
a light source which emits a beam of light,
a detector to detect and process light received from the emitter into an output signal; and
a coding element having a plurality of spaces and markings, causing the light beam to be interrupted by the pattern of spaces and markings, the markings designed to eliminate at least one harmonic frequency of the output signal.

2. The optical encoder according to claim 1, wherein at least a first edge of each of the markings is other than a straight edge.

3. The optical encoder according to claim 1, wherein the coding element is a linear coding strip.

4. The optical encoder according to claim 1, wherein the coding element is a code wheel.

5. The optical encoder according to claim 1, wherein the detector includes multiple sets of photodetectors to detect the collimated light beam, and
signal processing circuitry to generate signals corresponding to the light detected by the photodiodes.

6. The optical encoder according to claim 5, wherein a light detecting period on one pair of photodiodes corresponds to a dark period on an adjacent pair of photodiodes.

7. A coding element for use in an optical encoder comprising:
a material having a transparency or reflectivity to light; and
a plurality of spaced opaque markings made on the material, the opaque spaced markings having a first edge and a second edge, wherein the first edge is other than a straight edge.

8. The coding element of claim 7 wherein the second edge is other than a straight edge.

9. The coding element according to claim 8, wherein the opaque markings are designed to notch at least one selected harmonic frequency.

10. A method of forming a coding element comprising:
providing a material with a transparency or reflectivity to light; and
forming a plurality of markings at selected areas of the material, the markings configured to notch a harmonic frequency of a signal.
